# EUROPÄISCHE PATENTANMELDUNG

(11) **EP 1 147 931 A1**
(43) Veröffentlichungstag der Anmeldung: **24.10.2001**
(21) Anmeldenummer: 01106083.7
(22) Anmeldetag: 13.03.2001
(51) Int. Cl.: B60J 3/02

(54) **Sonnenblende für Fahrzeuge**

(30) Priorität: 22.04.2000 DE 10020106
(71) Anmelder: Johnson Controls Interiors GmbH & Co. KG, 42285 Wuppertal (DE)
(72) Erfinder: Viertel, Lothar, 66802 Altforweiler (DE); Welter, Patrick, 57730 La Chambre (FR); Weiss, Didier, 57880 Guerting (FR); Karg, Horst, 38442 Wolfsburg (DE); Müller, Hans-Gerhard, 38530 Didderse (DE)

(57) **Zusammenfassung**

Beschrieben wird eine Sonnenblende mit einem Sonnenblendenkörper (1), der um den langen Achsschenkel (47) einer L-förmig ausgebildeten Sonnenblendenachse (5) klappbar, parallel zu diesem langen Achsschenkel (47) verschiebbar und um einen etwa vertikal ausgerichteten kurzen Achsschenkel (46) verschwenkbar gelagert ist. Dabei sitzt der kurze Achsschenkel (46) in einem Lagerbock (4) und der freie Endbereich des langen Achsschenkels (47) lösbar in einem Gegenlagergehäuse (7) und die Anordnung des Sonnenblendenkörpers (1) ist so getroffen, daß er sowohl über den Lagerbock (4) als auch über das Gegenlagergehäuse (7) hinaus verschiebbar am langen Achsschenkel (47) gelagert ist.

## Beschreibung

Die Erfindung bezieht sich auf eine Sonnenblende für Fahrzeuge gemäß dem Oberbegriff des Hauptanspruchs.

Die DE 36 03 852 A1 zeigt eine Sonnenblende für Fahrzeuge mit einem Sonnenblendenkörper, einem Führungsrohr, einem Schlitten, einer L-förmigen Sonnenblendenachse, die einen kurzen Achsschenkel und einen langen Achsschenkel aufweist und einem an einer Fahrzeugkarosserie befestigbaren, den kurzen Achsschenkel aufnehmenden Lagerbock, wobei der Sonnenblendenkörper an einer Längskante das Führungsrohr trägt, der Schlitten drehfest, jedoch axial verschiebbar im Führungsrohr gelagert ist und eine Durchgangsbohrung aufweist, in welcher der lange Schenkel der Sonnenblendenachse drehbar, jedoch gegen ein axiales Verschieben gesichert gelagert ist. Bei dieser bekannten Sonnenblende sind das Führungsrohr und der darin schiebebeweglich aufgenommene Schlitten innerhalb des Sonnenblendenkörpers angeordnet und im Sonnenblendenkörpermaterial eingelagert, so daß diese Teile nicht zugänglich sind. Befindet sich die bekannte Sonnenblende in einer einen Blendschutz bietenden Position vor einer Fahrzeug-Windschutzscheibe, so ist sie zum einen über den die Sonnenblendenachse tragenden Lagerbock und zum anderen über ein Gegenlagergehäuse, in das ein am Sonnenblendenkörper angeordneter Gegenlagerstift lösbar eingreift, gehalten. In dieser Position kann der Sonnenblendenkörper aus einer Nichtgebrauchslage unter dem Fahrzeugdach in eine Gebrauchslage vor eine Windschutzscheibe oder umgekehrt geklappt werden. Hingegen ist ein Verschieben des Sonnenblendenkörpers entlang des langen Achsschenkels der Sonnenblendenachse nicht möglich, und zwar weder in Richtung zur A-Säule noch in Richtung zur Fahrzeuglängsmitte. Eine Verschiebbarkeit des Sonnenblendenkörpers entlang des langen Achsschenkels der Sonnenblendenachse ist erst dann gegeben, wenn sich der Gegenlagerzapfen außerhalb des Gegenlagergehäuses befindet, was in der Regel dann der Fall ist, wenn der Sonnenblendenkörper zu einer Fahrzeug-Seitenscheibe geschwenkt ist. Bei einem Verschieben des Sonnenblendenkörpers rückt aber die ohnehin sichtbare Sonnenblendenachse weiter in den Blickpunkt eines Betrachters, und zwar um so mehr, je weiter der Sonnenblendenkörper vom Lagerbock weg auf den langen Achsschenkel der Sonnenblendenachse verschoben wird. Dies wird von der Abnehmerschaft in zunehmendem Maße als unschön beanstandet.

Bei einer anderen, durch die DE 38 42 705 A1 bekanntgewordenen Sonnenblende für Fahrzeuge ist der Sonnenblendenkörper um eine etwa horizontale Achse klappbar, parallel zu dieser Achse verschiebbar und um eine etwa vertikale Achse verschwenkbar gelagert. Die Verschiebbarkeit des Sonnenblendenkörpers ist bei dieser bekannten Sonnenblende jedoch nicht entlang eines langen Achsschenkels einer Sonnenblendenachse vorgesehen, sondern soll dadurch erfolgen, daß der Sonnenblendenkörper an einer Längskante ein Gleitlagerelement aufweist, das mit einem zweiten, an einen länglichen, sich parallel zum Sonnenblendenkörper erstreckenden Trägerkörper angeordneten Gleitlagerelement verdrehfest jedoch verschiebebeweglich gekuppelt ist.

Der Erfindung liegt nun die Aufgabe zugrunde, eine Sonnenblende der eingangs abgehandelten Art zur Verfügung zu stellen, die sich dadurch auszeichnen soll, daß der Sonnenblendenkörper unabhängig davon, ob er sich vor einer Fahrzeug-Windschutzscheibe oder einer Fahrzeug-Seitenscheibe befindet, längs des langen Achsschenkels der Sonnenblendenachse verschiebbar ist, und zwar in der einen Richtung über den Lagerbock und in der anderen Richtung über das Gegenlagergehäuse hinaus und daß der im wesentlichen die Sonnenblendenachse, den Schlitten und das Führungsrohr umfassende Schiebemechanismus den Blicken eines Betrachters unabhängig von der jeweiligen Schiebestellung des Sonnenblendenkörpers entzogen ist, um der Sonnenblende auf diese Weise ein besonders gefälliges Aussehen zu verleihen.

Zur Lösung dieser Aufgabe sind erfindungsgemäß die im Anspruch 1 angegebenen Maßnahmen vorgesehen.

Der Sonnenblendenkörper kann nunmehr, auch wenn er sich vor einer Windschutzscheibe befindet, zur A-Säule oder zur Fahrzeuglängsmitte hin verschoben werden, was besonders wichtig ist. In beide Richtungen verschiebbar ist der Sonnenblendenkörper natürlich auch dann, wenn er sich vor einer Fahrzeug-Seitenscheibe befindet. Ein Sichtbarwerden der Sonnenblendenachse tritt beim Verschieben des Sonnenblendenkörpers im wesentlichen nicht ein. Die Gesamtlänge von Gehäuse und Abdeckhaube ist auf die Länge des Sonnenblendenkörpers abstimmbar, so daß sich für den Benutzer ein harmonischer Anblick ergibt, zumal auch eine Dickenabstimmung und ein gleichmäßiger Übergang zwischen diesen Bauteilen realisierbar ist.

Die Erfindung bietet beachtliche Vorteile. Im Hinblick auf ästhetische Gesichtspunkte ist es wichtig, daß die Führungsmittel für den Sonnenblendenkörper und nahezu der gesamte lange Achsschenkel der Sonnenblendenachse abgekapselt sind. Der verbleibende Bereich der Sonnenblendenachse kann vorteilhafterweise durch ein Gehäuse abgedeckt sein, was besonders formschön wirkt.

Der Sonnenblendenkörper kann separat gefertigt, kontrolliert und erst nach Gutbefund mit der das Führungsrohr tragenden Abschlußleiste verbunden werden. Dadurch kann ein Ausschuß in Grenzen gehalten werden.

Weitere vorteilhafte Ausgestaltungen und zweckmäßige Weiterbildungen der Erfindung sind in den Unteransprüchen angegeben.

Ein bevorzugtes Ausführungsbeispiel der Erfindung wird im folgenden anhand der Zeichnungen näher erläutert, und es zeigen:
- Fig. 1: eine komplette schaubildliche Gesamtansicht der neuen Sonnenblende,
- Fig. 2: den Sonnenblendenkörper der Sonnenblende nach Fig. 1,
- Fig. 3: eine Einlage für den Sonnenblendenkörper,
- Fig. 4: den Sonnenblendenkörper nach Fig. 2, versehen mit einem Umhüllungsmaterialzuschnitt und einer Spiegelbaueinheit,
- Fig. 5: einen Umhüllungsmaterialzuschnitt für den Sonnenblenden- körper,
- Fig. 6: einen Schnitt A - A nach Fig. 4,
- Fig. 7: den Sonnenblendenkörper nach Fig. 4, an der oberen Längskante bestückt mit einer ein Führungsrohr tragenden Abschlußleiste,
- Fig. 8: eine schaubildliche Ansicht der Abschlußleiste mit Füh- rungsrohr nach Fig. 7, bestückt mit Schlitten und Stopfen, wobei das Führungsrohr teilweise im Schnitt bzw. aufge- brochen dargestellt ist,
- Fig. 9: den Sonnenblendenkörper nach Fig. 7, bestückt mit einer Abdeckkappe,
- Fig. 10: eine schaubildliche Ansicht, der teilweise im Schnitt bzw. aufgebrochen dargestellten Abdeckkappe,
- Fig. 11: einen Schnitt A - A nach Fig. 9 und

- Fig. 12: die Sonnenblendenachse mit Lagerbock und daran zu befestigenden Gehäusehälften in Explosivdarstellung.

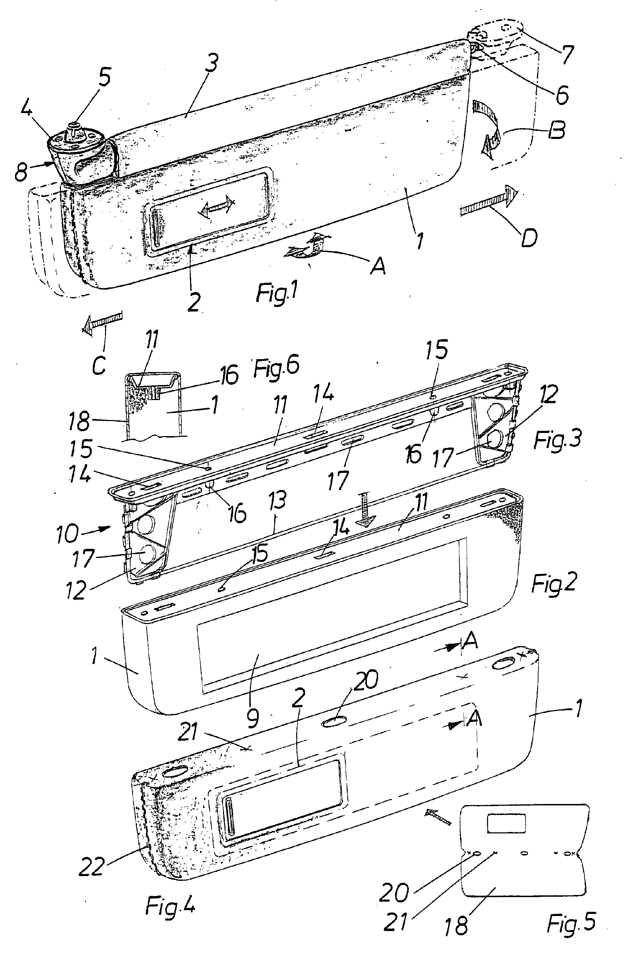

Die neue Sonnenblende nach Fig. 1 umfaßt einen Sonnenblendenkörper 1 mit einer Spiegelbaueinheit 2, eine noch zu beschreibende Abdeckhaube 3, einen an einer Fahrzeugkarosserie zu befestigenden Lagerbock 4, eine Sonnenblendenachse 5 mit einem aus der Abdeckkappe einendig heraustretenden, als Gegenlagerzapfen 6 dienenden Endbereich, ein ebenfalls an der Fahrzeugkarosserie zu befestigendes Gegenlagergehäuse 7 zur lösbaren Lagerung des Gegenlagerzapfens 6 sowie ein an die Abdeckkappe 3 angrenzendes Gehäuse 8, welches am Lagerbock 4 festgelegt ist.

Der Sonnenblendenkörper 1 kann aus seiner dargestellten Gebrauchsstellung nach oben geklappt und auch wieder zurück nach unten geklappt werden, was durch den Doppelpfeil A angedeutet werden soll. Die Abdeckhaube 3 nimmt an der jeweiligen Klappbewegung teil. Der Sonnenblendenkörper 1 kann auch gemeinsam mit der Abdeckhaube 3 von einer Anordnung vor einer Fahrzeug-Windschutzscheibe gemäß Richtungspfeil B zu einer Fahrzeug-Seitenscheibe geschwenkt werden. Schließlich kann der Sonnenblendenkörper 1 aus seiner in Fig. 1 mit starken Strichlinien dargestellten Normallage entsprechend dem Richtungspfeil C nach links oder gemäß dem Richtungspfeil D nach rechts bewegt werden, wie auch mit strichpunktierten Linien angedeutet. Dabei verharrt die Abdeckhaube 3 in ihrer dargestellten Position, ebenso wie der Lagerbock 4, die Sonnenblendenachse 5 oder das Gegenlagergehäuse 7. Die Verschiebung nach links, also zur A-Säule (nicht gezeigt) hin, kann z. B. 30 mm und oder nach rechts z. B. 90 mm betragen, so daß sich ein optimaler Blendschutz einstellen läßt.

Die Sonnenblende weist einen mehrteiligen Aufbau auf. Ein erstes Bauteil ist der Sonnenblendenkörper 1. Dieser besteht aus einem etwa rechteckigen, plattenförmigen Körper 1 aus Kunststoff, insbesondere Schaumkunststoff, wobei sich EPP als besonders gut geeignet erwiesen hat. Die Ecken des etwa rechteckigen Sonnenblendenkörpers sind durch Abrundungen entschärft. Der Sonnenblendenkörper 1 nach Fig. 2 läßt an einer Breitseite eine Vertiefung 9 erkennen, die zur versenkten Aufnahme der Spiegelbaueinheit 2 dient.

Zur Stabilisierung des Sonnenblendenkörpers 1 ist in diesem eine Verstärkungseinlage 10 eingelagert, die in Fig. 3 dargestellt ist. Die Verstärkungseinlage 10 besteht aus einem U-förmigen Kunststoff-Spritzgußkörper mit einer oberen Rahmenleiste 11 und Schenkeln 12. Der Kunststoff-Spritzgußkörper ist seinerseits durch einen damit verbundenen U-förmigen Drahtbügel 13 stabilisiert. Die Rahmenleiste weist Öffnungen in Form von Schlitzen 14 oder Bohrungen 15 sowie Schraubdome 16 auf, deren Zweck noch zu erläutern ist. Materialdurchbrüche 17 dienen zum Schaumdurchlaß beim Aufschäumen des Kunststoffmaterials und damit zur festen Verankerung der Verstärkungseinlage 10 im Sonnenblendenkörper 1.

Der Sonnenblendenkörper 1 nach Fig. 2 ist mit einer Verstärkungseinlage 10 nach Fig. 3 ausgestattet, von der die Rahmenleiste 11, die (vgl. auch Fig. 6) rinnenförmig gestaltet ist zu erkennen ist.

Der Sonnenblendenkörper 1 nach Fig. 2 wird mit einem Umhüllungsmaterial, z. B. einem Lederzuschnitt 18, wie in Fig. 5 gezeigt umhüllt und mit einer Spiegelbaueinheit 2 ausgestattet, um die in Fig. 4 gezeigte Endform zu erhalten. Der Lederzuschnitt 18 weist eine vorgestanzte Öffnung für die Spiegelbaueinheit 2 und vorgestanzte Öffnungen 20 oder Einschnitte 21 auf, die nach der Anbringung des Lederzuschnitts 18 am Sonnenblendenkörper 1 deckungsgleich mit den Schlitzen 14 und den Bohrungen 15 sind. Der Lederzuschnitt 18 ist am Sonnenblendenkörper 1 durch eine Naht, vorzugsweise Ziernaht 22 festgelegt.

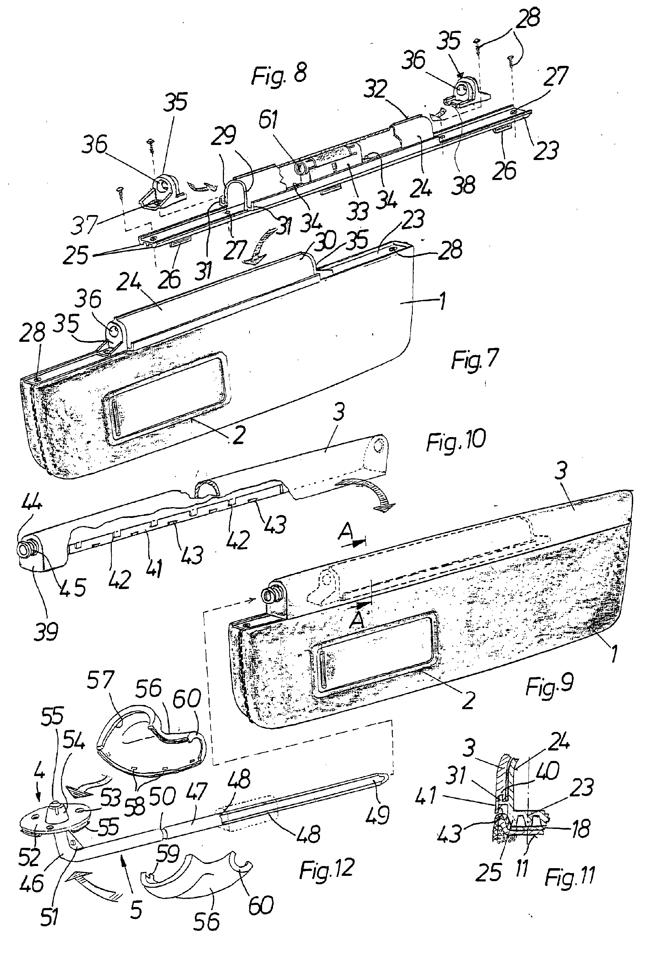

Ein weiteres Bauteil der neuen Sonnenblende ist eine ein Führungsrohr 24 tragende Abschlußleiste 23. Diese kann einstückig mit dem Führungsrohr 24 und aus einem Strangpreßprofil aus Aluminium bzw. einer Aluminiumlegierung gebildet sein. Wie Fig. 8 zeigt, wird das Führungsrohr 24 von der Abschlußleiste 23 beidendig überragt, was durch Freifräsen erreichbar ist. Bei einer separaten Herstellung von Führungsrohr 24 und Abschlußleiste 23 und einer Fügeverbindung dieser Teile kann natürlich ein Freifräsen entfallen. Die Abschlußleiste 23 ist unterseitig mit durchlaufenden Stegen 25 und in partieller Anordnung mit stegförmigen Ansätzen 26, die freigefräst sind, versehen. Bohrungen 27 in der Abschlußleiste 23 sind beim Anbringen der Abschlußleiste 23 am Sonnenblendenkörper 1 deckungsgleich mit den Bohrungen 15 und lassen ein Eindrehen von Befestigungsschrauben 28 zu.

Das Führungsrohr 24 ist unrund ausgebildet und weist zwei parallel zueinander verlaufende Wandungen 29 auf, die oberendig in eine gewölbte Kopfwandung 30 und unterendig in die Abschlußleiste 23 übergehen. An den Wandungen 29 sind außenseitig hakenförmige Leisten 31 angeformt, die sich über die Führungsrohrlänge erstrecken. Außenseitig an der Kopfwandung 30 erstreckt sich ein Steg 32.

Im Inneren des Führungsrohrs 24 ist längsverschiebbar ein dem Öffnungsprofil des Führungsrohrs 24 angepaßter Schlitten 33 angeordnet, der an seinen Enden überstehend angeformte Rastnasen 34 aufweist. Mit Ausnahme der Rastnasen 34 kann der Schlitten 33 eine Ausbildung aufweisen, wie sie in der DE 36 03 852 A1 oder DE 197 22 259 C1 gezeigt und beschrieben ist, so daß hier insoweit keine weitere Erläuterung erforderlich ist.

Der Schlitten 33 wird, wie in Fig. 8 gezeigt, in das Führungsrohr 24 eingeführt, wonach das Führungsrohr 24 an den Enden durch Stopfen 35 verschlossen wird. Die Stopfen 35, die aus Kunststoff-Spritzgußteilen bestehen können, weisen jeweils eine Durchgangsbohrung 36 für die Sonnenblendenachse 5, eine Durchgangsbohrung 37 für eine Befestigungsschraube 28 sowie Hinterrastungselemente 38 auf, die mit den Rastnasen 34 am Schlitten 33 zwecks axialer Einrastung nach Längsverschiebung zusammenwirken.

Die Einheit nach Fig. 8, bestehend aus der Abschlußleiste 23 mit Führungsrohr 24, Schlitten 33 und Stopfen 35 ist am Sonnenblendenkörper 1 befestigbar, und zwar mittels der Befestigungsschrauben 28 und das Ergebnis ist in Fig. 7 gezeigt. Vor dem Anschrauben wird die Abschlußleiste 23 auf den oberen Längsrand des Sonnenblendenkörpers 1 aufgesetzt, derart, daß die stegförmigen Ansätze 26 die Öffnungen 20 im Lederzuschnitt 18 und die Schlitze 14 der Rahmenleiste 11 durchsetzen und auch in das Sonnenblendenkörpermaterial eindringen. Nach dem Anschrauben befindet sich die Umhüllung 18 zwischen der Rahmenleiste 11 und der Abschlußleiste 23 und die Umhüllung 18 wird um den Sonnenblendenkörper 1 herum faltenfrei nachgespannt, indem die Stege 25 in das Rinnenprofil der Rahmenleiste 11 eingreifen, was durch Fig. 11 verdeutlicht wird.

Die insoweit gemäß Fig. 7 vorbereitete Sonnenblende wird hiernach mit der Abdeckhaube 3, wie in Fig. 9 gezeigt, bestückt. Bei der Abdeckhaube 3 handelt es sich zweckmäßigerweise um ein Kunststoff-Spritzgußteil in U-Form mit geschlossenen Stirnenden 39, in denen jedoch Durchgangsöffnungen für die Sonnenblendenachse 5 vorgesehen sind.

Die Längsränder der Abdeckhaube 3 weisen eine Nut 40 zum Übergreifen der hakenförmigen Leisten 31 auf. Die Nut 40 wird jeweils durch einen durchlaufenden Randstreifen 41 und durch örtlich angeformte, in Reihe nebeneinander angeordnete Stege 42 gebildet. Am Randstreifen 41 sind in Reihe nebeneinander Klipsnasen 43 angeformt. Die Abdeckhaube 3 ist damit durch bloßes Aufstecken montierbar und sitzt hiernach mit ihren Längsrändern fest verankert an den hakenförmigen Leisten 31. An einem Stirnende 39 weist die Abdeckhaube 3 einen rohrförmigen Ansatz 44 mit einer Ringnut 45 auf. Eine nichtgezeigte Nut im Innern der Abdeckhaube 3 dient zur Aufnahme des Stegs 32 und zur zusätzlichen Stabilisierung.

Die Sonnenblende nach Fig. 9 ist zu vervollständigen durch die Montage der Sonnenblendenachse 5 nach Fig. 12. Wie ersichtlich, ist die Sonnenblendenachse 5 L-förmig ausgebildet und weist einen kurzen Achsschenkel 46 und einen langen Achsschenkel 47 auf. Der kurze Achsschenkel 46 ist drehbeweglich im Lagerbock 4 aufgenommen und hier auch axial festgelegt. Der lange Achsschenkel 47 weist Rastnuten 48 auf, in die der Schlitten 33 mit nicht gezeigten Gegenrastelementen zwecks axialer Festlegung einrastet. Ferner weist der lange Achsschenkel 47 über einen axialen Teilbereich eine Abflachung 49 als Rastfläche auf, die mit einem Bremselement des Schlittens 33 zusammenwirkt, um den Sonnenblendenkörper 1 in seiner Nichtgebrauchslage unter einem Dachhimmel zu halten. Eine Ringnut 50 am langen Achsschenkel definiert die Position des Sonnenblendenkörpers 1.

Zwischen dem kurzen Achsschenkel 46 und dem langen Achsschenkel 47 befindet sich ein Stabilisierungselement 51.

Der Lagerbock 4 weist eine kreisförmige Befestigungsplatte 52 mit Bohrungen 53 zum Durchführen von Befestigungselementen auf. In einem Konus 54 des Lagerbocks 4 ist das freie Ende des kurzen Achsschenkels 46 eingepreßt und durch einen den Konus 54 übergreifenden und sich auf dessen Rand abstützenden Pilzkopf 55 gehalten.

Am Rand der Befestigungsplatte 52, die bevorzugt aus einem Kunststoff-Spritzgußteil besteht, sind Raststege 55 angeformt, die zur Halterung des Gehäuses 8 dienen. Das Gehäuse 8, ebenfalls ein Kunststoff-Spritzgußteil, besteht aus zwei schalenartigen Gehäusehälften 56 mit jeweils einer Nut oder einem einwärts gerichteten kragenförmigen Ansatz 57 zum Hintergreifen der Raststege 55. Die Gehäusehälften 56 sind durch Rastaufnahmen 58 an der einen Gehäusehälfte und durch Rasthaken 59 an der anderen Gehäusehälfte aneinander festlegbar. Ein kragenförmiger Ansatz 60 an den Gehäusehälften 56 ist zum Eingreifen in die Ringnut 45 des Ansatzes 44 an der Abdeckhaube 3 vorgesehen. Nach dem Anbringen des Gehäuses 8 ist die Sonnenblende entsprechend Fig. 1 vervollständigt.

## Patentansprüche

1. Sonnenblende für Fahrzeuge mit
- einer in etwa L-förmigen, eine Vertikal- (46) und eine Horizontalachse (47) aufweisende Sonnenblendenachse (5),
- einem Sonnenblendenkörper (1, 10) der um die Horizontalachse (47) schwenkbar und in deren Längsrichtung verschiebbar ist,
- einem mit dem Sonnenblendenkörper (1, 10) verbundenen Trägerkörper (23) zur beweglichen Halterung des Sonnenblendenkörpers (1, 10) an der Horizontalachse (47), wobei der Trägerkörper (23) geeignete Halte- bzw. Führungsmittel (24, 33) zur Ermöglichung einer Relativbewegung zwischen dem Sonnenblendenkörper (1, 10) und der Horizontalachse (47) aufweist, **dadurch gekennzeichnet, daß** ein verschiebbar zum Trägerkörper (23) und zur Längsrichtung des Sonnenblendenkörpers (1, 10) angeordnetes Teil (3) vorgesehen ist, welches den Trägerkörper (23) und die Horizontalachse (47) zumindest zu einem überwiegenden Teil abdeckt.

2. Sonnenblende nach Anspruch 1, **dadurch gekennzeichnet, daß** der Trägerkörper (23) an einer Längskante des Sonnenblendenkörpers (1, 10) befestigt ist und die Halte- bzw. Führungsmittel (24, 33) einen mit dem Trägerkörper (23) verbundenen rohrförmigen Körper (24) umfassen, in dem ein schlittenartiger Körper (Schlitten 33) drehfest zum rohrförmigen Körper (24) jedoch axial verschiebbar zu diesem, gelagert ist, wobei der Schlitten (33) zur beweglichen Lagerung der Horizontalachse (47) dient.

3. Sonnenblende nach Anspruch 2, **dadurch gekennzeichnet, daß** die Horizontalachse (47) im Schlitten (33) drehbar, jedoch gegen axiales Verschieben gesichert, gelagert ist.

4. Sonnenblende nach wenigstens einem der vorangegangenen Ansprüche, **dadurch gekennzeichnet, daß** das abdeckende Teil (3) haubenförmig ausgebildet ist und die Horizontalachse (47) mit Ausnahme von aus seinen Stirnenden heraustretenden, kurzen Endbereichen umschließt, von denen einer einen Gegenlagerzapfen (6) zum lösbaren Eingriff in ein an der Fahrzeugkarosserie befestigbares Gegenlagergehäuse (7) bildet, während der andere in die Vertikalachse (46) der Sonnenblendenachse (5) übergeht und im Übergangsbereich von einem Gehäuse (8) umgriffen ist, welches an einem die Vertikalachse (46) aufnehmenden Lagerbock (4) festgelegt ist, wobei sich das benachbarte Stirnende des haubenförmigen Teils (3) anschließt und sich zusammen mit diesem in etwa über die Länge des Sonnenblendenkörpers (1, 10) erstreckt, wenn sich dieser in seiner nicht entlang des Horizontalschenkels (47) in die eine oder andere Richtung verschobenen Normalstellung befindet.

5. Sonnenblende nach wenigstens einem der vorangegangenen Ansprüche, **dadurch gekennzeichnet, daß** der Trägerkörper (23) in Form einer den rohrförmigen Körper (Führungsrohr 24) tragenden Abschlußleiste ausgeführt ist, die über Befestigungselemente (28) am Sonnenblendenkörper (1, 10) gehalten ist und das Führungsrohr (24) beidendig überragt.

6. Sonnenblende nach wenigstens einem der vorangegangenen Ansprüche, **dadurch gekennzeichnet, daß** der Sonnenblendenkörper (1) eine etwa rechteckige Plattenform aufweist und aus Kunststoff, wie EPP besteht.

7. Sonnenblende nach wenigstens einem der vorangegangenen Ansprüche, **dadurch gekennzeichnet, daß** im Sonnenblendenkörper (1) eine Verstärkungseinlage (10) eingelagert ist, die aus einem Kunststoff-Spritzgußkörper und einem damit verbundenen Drahtbügel (13) besteht.

8. Sonnenblende nach wenigstens einem der vorangegangenen Ansprüche, **dadurch gekennzeichnet, daß** der Kunststoff-Spritzgußkörper eine obere Rahmenleiste (11) aufweist, die mit der oberen Längskante des Sonnenblendenkörpers (1) abschließt und Öffnungen (14, 15), Schraubdome (16) oder dgl. zur Verankerung der das Führungsrohr (24) tragenden Abschlußleiste (23) aufweist.

9. Sonnenblende nach wenigstens einem der vorangegangenen Ansprüche, **dadurch gekennzeichnet, daß** der Sonnenblendenkörper (1) mit einem Umhüllungsmaterial aus Kunststoff-, Textil- oder insbesondere Ledermaterial versehen ist.

10. Sonnenblende nach wenigstens einem der vorangegangenen Ansprüche, **dadurch gekennzeichnet, daß** das Umhüllungsmaterial an der oberen Längskante des Sonnenblendenkörpers (1) zwischen der Rahmenleiste (11) des Kunststoff-Spritzgußkörpers und der Abschlußleiste (23) eingeklemmt ist, wobei die Rahmenleiste (11) rinnenförmig ausgebildet ist und die Abschlußleiste (23) mit zumindest einem in die Rinnenform eingreifenden Steg (25) versehen ist.

11. Sonnenblende nach wenigstens einem der vorangegangenen Ansprüche, **dadurch gekennzeichnet, daß** die Abschlußleiste (23) einstückig mit dem Führungsrohr (24) ausgebildet ist und aus dem Abschnitt eines spanabhebend bearbeiteten Strangpreßprofils besteht.

12. Sonnenblende nach wenigstens einem der vorangegangenen Ansprüche, **dadurch gekennzeichnet, daß** die Abschlußleiste (23) an ihrer Unterseite den zumindest einen in die rinnenförmige Rahmenleiste (11) eingreifenden Längssteg (25) und in partieller Anordnung stegförmige Ansätze (26) aufweist, die die Öffnungen (14) in der Rahmenleiste (11) durchsetzen und in das Sonnenblendenkörpermaterial eingreifen.

13. Sonnenblende nach wenigstens einem der vorangegangenen Ansprüche, **dadurch gekennzeichnet, daß** die Abschlußleiste (23) Bohrungen (27) zum Durchführen von in die Schraubdome (16) verankerbaren Befestigungselementen aufweist.

14. Sonnenblende nach wenigstens einem der vorangegangenen Ansprüche, **dadurch gekennzeichnet, daß** das Führungsrohr (24) unrund ausgebildet ist und parallel zu den Breitseiten des Sonnenblendenkörpers (1) verlaufende Wandungen (29) aufweist, die oberendig in eine gewölbte Kopfwandung (30) und unterendig in die Abschlußleiste (23) übergehen, wobei an den Wandungen (29) nach außen gerichtete hakenförmige Leisten (31) zur Befestigungsanordnung der Abdeckhaube (3) angeformt sind.

15. Sonnenblende nach wenigstens einem der vorangegangenen Ansprüche, **dadurch gekennzeichnet, daß** an den Längsrändern der Abdeckhaube (3) stufenförmige Absätze, Längsnuten (40) und Klipsnasen (43) zum Abstützen, Übergreifen und Verrasten der Abdeckhaube (3) an den hakenförmigen Leisten (31) vorgesehen sind.

16. Sonnenblende nach wenigstens einem der vorangegangenen Ansprüche, **dadurch gekennzeichnet, daß** die freien Enden des Führungsrohrs (24) durch Stopfen (35) verschlossen sind, die jeweils eine Öffnung (36) zum Durchlaß der Sonnenblendenachse (5) sowie Hinterrastungselemente (38) aufweisen.

17. Sonnenblende nach wenigstens einem der vorangegangenen Ansprüche, **dadurch gekennzeichnet, daß** der Schlitten (33) dem Öffnungsquerschnitt des Führungsrohrs (24) angepaßt ist, mit einem an der Sonnenblendenachse (5) angreifenden federbelasteten Bremselement bestückt ist und beidendig mit Rastnasen (34) versehen ist, die mit den Hinterrastungselementen (38) der Stopfen (35) kuppelbar sind.

18. Sonnenblende nach wenigstens einem der vorangegangenen Ansprüche, **dadurch gekennzeichnet, daß** an einem Stirnende der Abdeckhaube (3) ein rohrförmiger Ansatz (44) mit zumindest einer Ringnut (45) angeordnet ist, die zur zusätzlichen Halterung des am Lagerbock (4) festgelegten Gehäuses (8) dient.

19. Sonnenblende nach wenigstens einem der vorangegangenen Ansprüche, **dadurch gekennzeichnet, daß** das Gehäuse (8) etwa längsmittig geteilt ist und aus zwei schalenförmigen Hälften (56) besteht, die über angeformte Klips- und Rastelemente (58, 59) aneinander festlegbar sind.

20. Sonnenblende nach wenigstens einem der vorangegangenen Ansprüche, **dadurch gekennzeichnet, daß** der Sonnenblendenkörper (1) mit einer Spiegelbaueinheit (2) ausgestattet ist, die zumindest einen Spiegel und ein Spiegelabdeckelement aufweist.

21. Sonnenblende nach wenigstens einem der vorangegangenen Ansprüche, **dadurch gekennzeichnet, daß** der Sonnenblendenkörper (1) mit einer einen Normalspiegel (Planspiegel) und einen Vergrößerungsspiegel sowie ein Spiegelabdeckelement aufweisenden Spiegelbaueinheit (2) ausgestattet ist.

22. Sonnenblende nach wenigstens einem der vorangegangenen Ansprüche, **dadurch gekennzeichnet, daß** die Abschlußleiste (23) und das Führungsrohr (24) als separate Bauteile gefertigt und durch eine Fügeverbindung, wie Schweißverbindung aneinander festgelegt sind.
